# EUROPEAN PATENT APPLICATION

(11) **EP 1 394 868 A1**
(43) Date of publication of application: **03.03.2004**
(21) Application number: 02025057.7
(22) Date of filing: 11.11.2002
(51) Int. Cl.: H01L 41/113

(54) **Piezoelectric generator**

(30) Priority: 30.08.2002 JP 2002253044
(71) Applicant: USC Corporation, Tokyo (JP)
(72) Inventor: Sakai, Yasuhiro, Shinagawa-ku, Tokyo (JP)
(74) Representative: Strehl Schübel-Hopf & Partner

(57) **Abstract**

A piezoelectric generator is provided which can improve an output current by almost two times by having an ultrathin metal electrode bonded between piezoceramic elements, with polarizations of the piezoceramic elements oriented in the same direction. In the piezoelectric generator for generating electricity by causing deformations to a platelike piezoceramic member (10), the piezoceramic member comprises two platelike piezoceramic elements (10a,10b) and an ultrathin metal electrode (11) disposed therebetween, the piezoceramic elements and the metal electrode being bonded together in layers, the piezoceramic elements having their polarizations oriented in the same direction. A central portion or end portions of one surface of the piezoceramic member is supported by a cushion member (3) to form a flexible support structure that makes it difficult for a natural vibration of the piezoceramic member to be transmitted to other structures.

## Description

### BACKGROUND OF THE INVENTION

### FIELD OF THE INVENTION

The present invention relates to a piezoelectric generator capable of developing an output current almost two times that produced by conventional piezoelectric generators using prior art piezoelectric ceramic elements.

### DESCRIPTION OF THE PRIOR ART

Piezoelectric materials have a wide range of applications as a transducer for transforming energy from a mechanical energy to an electrical energy and vice versa. Many materials have been known, both inorganic and organic, which exhibit the piezoelectric effect. Among materials currently in practical use are lead zirconium titanate (PZT)-based ceramic materials (piezoelectric ceramics).

The piezoelectric ceramic element or piezoceramic element is a polycrystalline ceramic with a piezoelectricity that is produced by subjecting it to a high DC voltage to cause a residual polarization. Since a basic piezoelectric constant of the piezoceramic element can be varied substantially freely depending on its composition, its application range is wide. A piezoceramic element of lead zirconate titanate in particular has a wide selection range of composition ratio and additives and therefore a variety of applications.

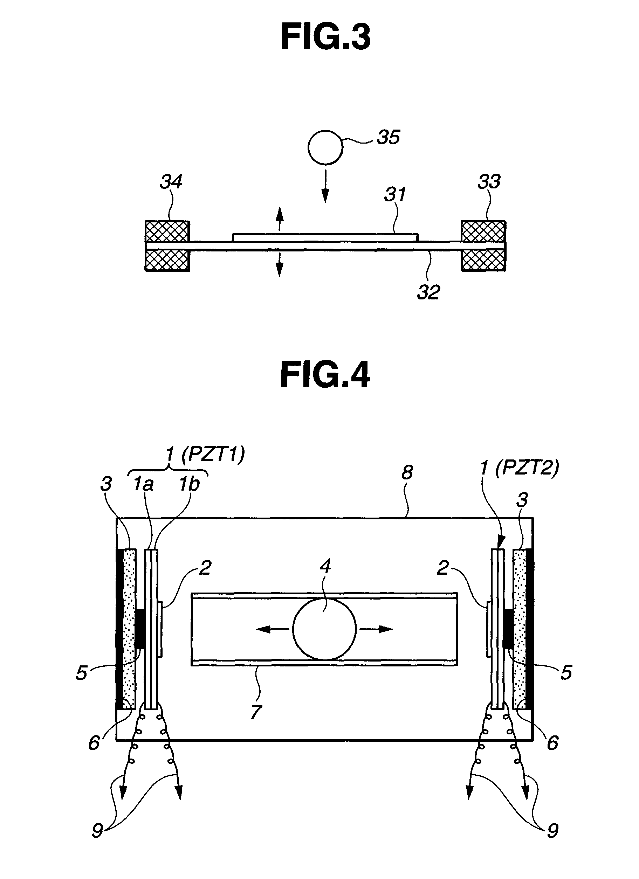

Fig. 3 is an explanatory view showing a conventional piezoelectric generator. This piezoelectric generator comprises a piezoceramic plate 31 bonded to a base plate 32 of acrylic material whose ends are held by holders 33, 34 made of a hard material such as metal. A steel ball 35 is dropped onto the piezoceramic plate 31 to apply a mechanical impact energy to the piezoelectric ceramic plate 31 to excite a deflective oscillation in the plate 31 thus producing an electric energy.

Although there are expectations for its practical applications, the conventional PZT-based piezoceramic element described above has a drawback of a small generating capacity and cannot meet its expectations. Further, in piezoelectric generators using a piezoceramic element, it is essential that a natural vibration of the piezoceramic element plate 31 be continued for as long as possible. To meet this requirement, a support structure must ensure that the natural vibration of the piezoceramic element plate 31 is not accompanied by a mechanical resistance. Further, in the conventional technique described above, because the base plate 32 and the piezoceramic element plate 31 are made of different materials, it is difficult to bring the center of vibration (part not expanded or contracted) at a joint surface between the base plate 32 and the piezoceramic element plate 31. When this center emerges in the piezoceramic element plate 31, a polarization cancellation occurs reducing the generation efficiency.

To solve these problems of the conventional piezoelectric generator, the applicant of this invention previously proposed a piezoelectric generator (Japanese Patent Application No. 11-322280) as shown in Fig. 4. This piezoelectric generator comprises layered piezoceramic members 1 (PZT1), 1 (PZT2), each of which has two platelike piezoceramic elements 1a, 1b bonded together with their polarizations directed in opposite directions. These piezoceramic members 1, 1 are impacted on one side to generate electricity. This piezoelectric generator is suited for generating a small amount of electricity with a high generation efficiency.

The present invention is intended to provide a piezoelectric generator in which, unlike the previous application, the polarizations are arranged in one and the same direction and an ultrathin metal electrode is bonded between the platelike piezoceramic elements to increase the current output to almost two times that of the piezoelectric generator of the above construction that this applicant proposed previously.

### SUMMARY OF THE INVENTION

To achieve the above objective, a first aspect of the present invention provides a piezoelectric generator for generating electricity by causing deformations to a platelike piezoceramic member; wherein the piezoceramic member 10 comprises two platelike piezoceramic elements 10a, 10b and an ultrathin metal electrode 11 disposed therebetween, the piezoceramic elements and the metal electrode being bonded together in layers, the piezoceramic elements having their polarizations oriented in the same direction; wherein a central portion or end portions of one surface of the piezoceramic member 10 is supported by a cushion member 3 to form a flexible support structure that makes it difficult for a natural vibration of the piezoceramic member to be transmitted to other structures.

Further, a second aspect of the present invention provides a piezoelectric generator wherein the piezoceramic members 10, 10 supported by the cushion members 3, 3 are opposed to each other and a hard impact member 4 is disposed between the piezoceramic members 10 to reciprocally move between and impact the piezoceramic members 10.

Further, a third aspect of the present invention provides a piezoelectric generator wherein a hard impact member 4 that reciprocally moves and impacts the piezoceramic member supported by the cushion member 3 is arranged on one side or both sides of the piezoceramic member 10.

Further, a fourth aspect of the present invention provides a piezoelectric generator wherein the two piezoceramic elements 10a, 10b are formed in the same configuration to obtain a stable generation efficiency.

Further, a fifth aspect of the present invention provides a piezoelectric generator wherein the two piezoceramic elements 10a, 10b are each formed of a plurality of piezoceramic elements bonded together in layers.

Further, a sixth aspect of the present invention provides a piezoelectric generator wherein a lead zirconate titanate material is used for the piezoceramic elements 10a, 10b.

Further, a seventh aspect of the present invention provides a piezoelectric generator wherein the metal electrode is made from phosphor bronze or brass and formed 10-50 µm thick.

### BRIEF DESCRIPTION OF THE DRAWINGS

Fig. 1 is an explanatory diagram showing one embodiment of a piezoelectric generator according to the present invention.
Fig. 2 is a circuitry of a charging device in the embodiment.
Fig. 3 is a schematic view showing a conventional piezoelectric generator.
Fig. 4 is an explanatory diagram showing a piezoelectric generator previously proposed by the applicant of the present invention.

### DETAILED DESCRIPTION OF THE PREFERRED EMBODIMENT

Now, the present invention will be described in detail in conjunction with the embodiments shown in the accompanying drawings.

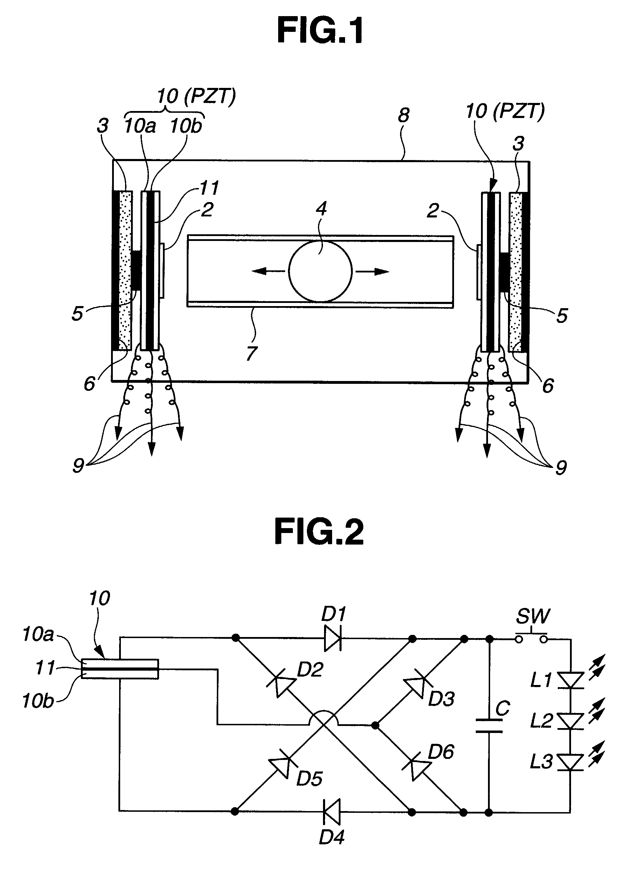

Fig. 1 shows one embodiment of this invention. Piezoceramic members 10 are arranged at both inner, closed ends of a cylindrical container 8 and are struck by a steel ball 4 to generate electricity.

One of the end faces of the container 8 is bonded with a cushion member 3 using an adhesive 6 and a piezoceramic member 10 is bonded to only a central part of the cushion member 3 using an adhesive 5. Similarly, the other end face of the container 8 is also bonded with the piezoceramic member 10 so that these two piezoceramic members 10 are opposed to each other.

A protector plate 2 is secured to a central part of each of the opposing surfaces of the piezoceramic members 10. Between the two piezoceramic members 10 is arranged a pipe 7 in which a steel ball 4 is rollably installed.

In this invention, when the piezoceramic members 10 are disposed horizontally for example, it is possible to hold not only the central portions of the piezoceramic members 10 but also their end portions with the cushion member 3, or to hold the central portions and end portions of the piezoceramic members 10 with the cushion member 3 on both the upper and lower surfaces of the piezoceramic members 10

The piezoceramic members 10 each have two platelike piezoceramic elements 10a, 10b of the same configurations (same material, same shape and same thickness) bonded together with an ultrathin metal electrode 11 sandwiched therebetween and with the polarizations of the piezoceramic elements 10a, 10b set in the same direction. The metal electrode 11 is made from a conductive metal such as phosphor bronze or brass and has a very small thickness of 10 to 50 µm.

Forming the metal electrode 11 ultrathin as described above can minimize a mechanical resistance of the metal electrode 11 so that even when deflective or bending vibrations occur at the joint surfaces between the two piezoceramic elements 10a, 10b and the metal electrode 11 as motion centers (portions that do not expand or contract), attenuations by the metal electrode 11 of the bending vibrations can be kept as small as possible. In this construction when the ceramic element 10a on one side expands, the ceramic element 10b on the other side contracts and electrodes of their output voltages are in opposite directions. So, the piezoceramic elements 10a, 10b form parallelly connected generators.

Further, this embodiment can prevent the polarization cancellation during the bending vibrations, which would otherwise be caused by one ceramic element 10a (or 10b) performing both expanding and contracting motions, thus generating electricity efficiently. A current produced as an electric energy is extracted by lead wires 9 electrically connected to the ends of the metal electrode 11.

While in this embodiment two piezoceramic elements 10a, 10b are stacked in layer through the metal electrode 11, each ceramic element 10a (10b) itself may be formed in a layered structure. In the layered structure a plurality of piezoceramic elements are bonded together (in this case polarizations are oriented in the same direction) to form one piezoceramic element 10a (or 10b).

When the piezoceramic element 10a (or 10b) itself is formed in a layered structure and these elements are bonded together with an adhesive that has an elasticity, for example, this elasticity effect can facilitate the bending of the piezoceramic member 10 that inherently lacks strength, thereby maintaining the bending strength. In this invention, the external shape of the piezoceramic member 10 is not limited to a particular shape but may take any desired geometry, such as circle, oval, triangle, square, or polygon, according to the application.

The cushion member 3 used in this invention is formed from a soft material, such as synthetic resin, rubber or a sponge form of these materials. The reason that only the central portion or end portions of such a cushion member 3 is secured to the piezoceramic member 10 using the adhesive 5 is to prevent a possible attenuation of the vibrations of the piezoceramic member 10. When the piezoceramic member 10 oscillates, those members supporting the piezoceramic member 10 tend to attenuate the oscillations of the piezoceramic member 10. To remove this attenuation factor, the cushion member 3 is used to put the piezoceramic member 10 in as free a condition as possible.

As in this invention, a strain of the piezoceramic member 10 becomes a natural vibration of the piezoceramic member and continues for a while. To have this natural vibration last long, it is important that this natural vibration not be transmitted to other structures than the piezoceramic member 10. While the natural vibration of the piezoceramic member 10 is transformed into an electric energy, vibrations of other structures all constitute mechanical resistances absorbing the natural vibration energy, making it impossible to extract an electric energy from the natural vibration. Hence, in this embodiment, the cushion member 3 is used as a means to realize a flexible contact that prevents the natural vibration from being transferred between the piezoceramic member 10 and other structures. This arrangement allows the natural vibration of the piezoceramic member 10 to continue long, improving a generation efficiency. This cushion member 3 also acts to alleviate an impact on the piezoceramic member 10. The protector plate 2 is made from a metal or synthetic resin and protects the piezoceramic member 10 from the impact of the steel ball 4.

While this embodiment uses the steel ball 4 placed in the pipe 7 as a member for impacting the piezoceramic member 10, the material and shape of the impacting member are not limited to those of the steel ball. For example, it may be a cylindrical or egg-shaped heavy object. A member for accommodating the impacting member is also not limited to the pipe 7 but may take any other form that allows the impacting member to freely move. For example, it may be a rail on which the impacting member can travel. Further, instead of the pipe 7, a spring member (extending upward or downward) may be fixed at one end and connected at the other end with the steel ball 4 so that the steel ball is struck against the piezoceramic members 10 on both sides by a lateral swinging motion of the spring member.

When the piezoelectric generator of the above construction is placed in a predetermined motion environment that utilizes wind, wave or artificial actions, the steel ball 4 rolls in the pipe 7 striking the left and right piezoceramic members 10 to apply an impact energy to them. Subjected to the impacts, the piezoceramic members 10 are excited to oscillate, repeating expansion and contraction and generating an AC current. As for the amount of electricity generated in this way, the parallel type piezoelectric generator of this invention can produce almost two times the output current of the serial type piezoelectric generator previously proposed by the inventor of the present invention.

Fig. 2 shows a circuit of a charger that uses the electricity generated by one of the piezoceramic members 10 of the above-described piezoelectric generator. In this embodiment, because two piezoceramic members 10 are opposed to each other, two such charging circuits are connected in parallel or in series. It is also possible to increase the number of the parallel circuits shown.

This charging circuit has two piezoceramic elements 10a, 10b as a piezoceramic member 10, a metal electrode 11, rectifying diodes D1-D6, a capacitor C for storing charge, a switch SW, and light emitting diodes L1-Le. The electricity generated by the piezoceramic element 10a is full-wave rectified by the diodes D1-D3 and the electricity generated by the piezoceramic element 10b is full-wave rectified by the diodes D4-D6. These full-wave rectified electricity is charged to the capacitor C. In this parallel circuit only one capacitor C may be used. By operating the switch SW, the capacitor C is discharged to light up the light emitting diodes L1-L3.

Using such a charging circuit to form a parallel type piezoelectric generator improves the generation efficiency by almost two times, making the piezoelectric generator of this invention a suitable power supply for a charging device and a light emitting device. Because of a simple construction, an ability to produce a large output current and an economical advantage, the piezoelectric generator described above is expected to find many practical applications. For example, this piezoelectric generator may be mounted on bicycles or attached to shoes to light up the light emitting diodes for their easy recognition at night. Also it may be mounted on battery-powered wrist watches or mobile cell phones and serve as a battery or a battery backup. Further, by using oscillations from waves to generate electricity, this piezoelectric generator can be expected to be used as a lighting device of a buoy.

Since, with the piezoelectric generator of this invention, the ultrathin metal electrode is sandwiched between the two platelike piezoceramic elements with the polarizations of the piezoceramic elements oriented in the same direction and all these three members are bonded together to form a piezoceramic member of a layered structure, and since an impact load is applied to the piezoceramic member to generate electricity, this piezoelectric generator can produce almost two times the output current of the serial type piezoelectric generator previously proposed by the applicant of this invention, thereby significantly expanding the field of use and improving applicability.

Further, since the piezoceramic member is held by the cushion member, the oscillation of the piezoceramic member can last long, improving the generation efficiency.

Further, since the piezoceramic elements of the same configuration are combined to form a layered piezoceramic member, the expansion and contraction of the piezoceramic elements can be performed appropriately, improving the generation efficiency. Further, since each of the piezoceramic elements is formed of a plurality of piezoceramic elements bonded in layers, the strength of the piezoceramic elements are improved.

Further, since the piezoceramic elements are made from a lead zirconate titanate material, they have a wide range of application as a piezoelectric generator.

Furthermore, since the metal electrode is made from a conductive metal such as phosphor bronze or brass and formed 10-50 µm thick, when the piezoceramic elements undergo bending vibrations to generate electricity, the metal electrode produces almost no mechanical resistance, preventing the generation efficiency from deteriorating easily.

## Claims

1. A piezoelectric generator for generating electricity by causing deformations to a platelike piezoceramic member;
wherein the piezoceramic member comprises two platelike piezoceramic elements and an ultrathin metal electrode disposed therebetween, the piezoceramic elements and the metal electrode being bonded together in layers, the piezoceramic elements having their polarizations oriented in the same direction;
wherein a central portion or end portions of one surface of the piezoceramic member is supported by a cushion member to form a flexible support structure that makes it difficult for a natural vibration of the piezoceramic member to be transmitted to other structures.

2. A piezoelectric generator according to claim 1,
wherein the piezoceramic members supported by the cushion members are opposed to each other and a hard impact member is disposed between the piezoceramic members to reciprocally move between and impact the piezoceramic members.

3. A piezoelectric generator according to claim 1,
wherein a hard impact member that reciprocally moves and impacts the piezoceramic member supported by the cushion member is arranged on one side or both sides of the piezoceramic member.

4. A piezoelectric generator according to any one of claim 1 to 3, wherein the two piezoceramic elements are formed in the same configuration.

5. A piezoelectric generator according to any one of claim 1 to 4, wherein the two piezoceramic elements are each formed of a plurality of piezoceramic elements bonded together in layers.

6. A piezoelectric generator according to any one of claim 1 to 5, wherein a lead zirconate titanate material is used for the piezoceramic elements.

7. A piezoelectric generator according to any one of claim 1 to 6, wherein the metal electrode is made from a conductive metal such as phosphor bronze or brass and formed 10-50 µm thick.
